# EUROPÄISCHE PATENTSCHRIFT

(11) **EP 3 821 211 B1**
(45) Veröffentlichungstag und Bekanntmachung des Hinweises auf die Patenterteilung: **22.11.2023**
(21) Anmeldenummer: 19735599.3
(22) Anmeldetag: 09.07.2019
(51) Int. Cl.: G01N 35/00, G01F 23/26, G01F 23/263

(54) **VORRICHTUNGEN UND VERFAHREN ZUR KAPAZITIVEN SCHAUMDETEKTION IN FLÜSSIGKEITSBEHÄLTERN**
DEVICES AND METHODS FOR CAPACITATIVE FOAM DETECTION IN FLUID CONTAINERS
DISPOSITIFS ET PROCÉDÉS DE DÉTECTION CAPACITIVE DE MOUSSE DANS DES RÉSERVOIRS DE LIQUIDE

(30) Priorität: 13.07.2018 EP 18183381
(43) Veröffentlichungstag der Anmeldung: 19.05.2021
(73) Patentinhaber: TECAN Trading AG, 8708 Männedorf (CH)
(72) Erfinder: OTT, Philipp, 8496 Steg (CH)
(74) Vertreter: Troesch Scheidegger Werner AG
(86) Internationale Anmeldenummer: PCT/EP2019/068387
(87) Internationale Veröffentlichungsnummer: WO 2020/011776

(56) Entgegenhaltungen:
- EP-A1- 1 860 409
- EP-A1- 2 977 730
- DE-A1- 19 949 985
- DE-A1-102017 128 166

## Beschreibung

### TECHNISCHES GEBIET DER ERFINDUNG

Die vorliegende Erfindung ist dem technischen Gebiet der automatisierten Laborsysteme bzw. -anlagen, wie beispielsweise medizinische, chemische, pharmazeutische oder forensische Analysegeräte, zugeordnet und betrifft spezifisch Flüssigkeitsbearbeitungssysteme, im Speziellen Vorrichtungen sowie entsprechende Verfahren zur kapazitiven Schaumdetektion in Flüssigkeitsbehältern.

Die Patentanmeldung EP 2 977 730 A1 offenbart Verfahren und Vorrichtungen zum Unterscheiden zwischen einer Kontaktierung von Schaum oder von Flüssigkeit in einem Flüssigkeitsbehälter eines Geräts mittels einer kapazitiv arbeitenden Messvorrichtung mit einem Fühler, der in dem Flüssigkeitsbehälter auf und ab bewegt werden kann.

### HINTERGRUND DER ERFINDUNG

Wenn in medizinischen, chemischen, analytischen, pharmazeutischen oder forensischen Labors grosse Mengen an Proben zu untersuchen sind, werden heute meist automatisierte Laborsysteme bzw. -anlagen eingesetzt, welche eine rasche und zuverlässige Verarbeitung jeder einzelnen Probe ermöglichen. Solche Laborsysteme sind oftmals als Flüssigkeitsbearbeitungssysteme auf die Handhabung von Flüssigkeitsvolumina ausgelegt. Dabei werden üblicherweise ein oder mehrere Roboter für den vollautomatischen Betrieb solcher Laborsysteme eingesetzt. Diese Roboter sind insbesondere auf den Umgang mit Flüssigkeitsbehältern spezialisiert und werden daher im Fachjargon als "Liquid Handling Roboter" bezeichnet. Die Proben werden meist in Probenbehältern, wie z.B. Probenröhrchen, von denen mehrere in einer Trägereinheit (im Fachjargon auch "Rack" genannt) angeordnet sind, angeliefert. Zudem werden oftmals Reagenzien, welche im Verlauf der Probenbearbeitung den Proben beigefügt werden, in Gefässen wie Fläschchen oder Trögen bereitgestellt.

Die Probenröhrchen und Reagenziengefässe weisen bei der Bereitstellung zur Verarbeitung durch das Flüssigkeitsbearbeitungssystem üblicherweise unterschiedlich Füllstände auf oder sind in manchen Fällen sogar leer. Zudem kann es vorkommen, dass sich beim Bereitstellen der Probenröhrchen und Reagenziengefässe Schaum auf der Oberfläche der Flüssigkeit bildet. Um eine rasche und effiziente Bearbeitung zu gewährleisten sollte der Füllstand der einzelnen Flüssigkeitsbehälter bekannt sein bevor der Roboter seine Arbeit aufnimmt. Insbesondere sollten leere Behälter identifiziert werden können, und das System sollte z.B. auch in der Lage sein zu erkennen, ob sich überhaupt ein Probenröhrchen in einer bestimmten Aufnahme der Trägereinheit befindet, was für ein Typ Probenröhrchen sich in einer bestimmten Aufnahme der Trägereinheit befindet, oder um was für eine Art Trägereinheit es sich handelt. Zudem kann es auch hilfreich sein, bestimmte Merkmale an einer Trägereinheit zu erkennen. Weiter ist es wichtig zu wissen, ob sich Schaum auf der Oberfläche der Flüssigkeit befindet.

Es besteht daher der Bedarf nach Mitteln, welche eine einfache (und folglich kostengünstige) sowie zuverlässige Bestimmung von Schaum in Flüssigkeitsbehältern in automatisierten Flüssigkeitsbearbeitungssystemen erlauben und damit eine effizientere Verarbeitung von grossen Mengen an Proben und Reagenzien ermöglichen.

### ZUSAMMENFASSUNG DER ERFINDUNG

Es ist eine Aufgabe der vorliegenden Erfindung Vorrichtungen zur Schaumdetektion in Flüssigkeitsbehältern bereitzustellen, mit deren Hilfe bereits bei der Bereitstellung eines Flüssigkeitsbehälters für die nachfolgende Verarbeitung durch den Liquid Handling Roboter schnell und zuverlässig erkannt werden kann, ob sich Schaum im Flüssigkeitsbehälter befindet. Diese Aufgabe wird erfindungsgemäss durch die Vorrichtung gemäss Anspruch 1 erfüllt.

Es ist zudem eine Aufgabe der vorliegenden Erfindung entsprechende Verfahren zur Schaumdetektion bereitzustellen, welche es erlauben, bereits bei der Bereitstellung eines Flüssigkeitsbehälters für die nachfolgende Verarbeitung durch den Liquid Handling Roboter schnell und zuverlässig zu erkennen, ob sich Schaum im Flüssigkeitsbehälter befindet. Diese Aufgabe wird erfindungsgemäss durch das in Anspruch 9 vorgeschlagene Verfahren gelöst.

Spezifische erfindungsgemässe Ausführungsvarianten werden in den abhängigen Ansprüchen festgelegt.

Eine erfindungsgemässe Vorrichtung zur kapazitiven Schaumdetektion in Flüssigkeitsbehältern, insbesondere Behälter (wie Tröge oder Fläschchen) für Reagenzien oder Probenröhrchen, umfasst:
- ein Sensor mit einer Messelektrode;
- eine leitende Bodenplatte geeignet zum Anordnen von mindestens einem Flüssigkeitsbehälter oder einer Trägereinheit mit mindestens einer Aufnahme zum Aufnehmen eines Flüssigkeitsbehälters, insbesondere eines Probenröhrchens;
- eine Sensorelektronikeinheit, welche mit der Messelektrode und der Bodenplatte verbunden ist und zum Bestimmen einer Impedanz, insbesondere einer Kapazität (d.h. des Imaginärteils der komplexwertigen Impedanz), zwischen der Messelektrode und der Bodenplatte ausgeführt ist; und
- eine Auswerteeinheit,
   wobei
- die Messelektrode im Wesentlichen senkrecht zur Bodenplatte angeordnet ist, insbesondere vertikal zur horizontal angeordneten Bodenplatte angeordnet ist;
- die Sensorelektronikeinheit ein Signalgenerator umfasst, mit welchem ein erstes Signal zum Anregen der Messelektrode mit einer ersten Frequenz und ein zweites Signal zum Anregen der Messelektrode mit einer zweiten Frequenz erzeugbar ist; und
- die Auswerteeinheit dazu ausgeführt ist, basierend auf der Impedanz, insbesondere der Kapazität, ein Vorhandensein von Schaum im Flüssigkeitsbehälter zu detektieren, falls eine Differenz zwischen einem ersten Messsignal beim Anregen der Messelektrode mit dem ersten Signal und einem zweiten Messsignal beim Anregen der Messelektrode mit dem zweiten Signal oder ein Verhältnis (Quotient) des ersten und zweiten Messsignals einen vorgegebenen Schwellwert übersteigt.

Die erfindungsgemässe Vorrichtung umfasst die Messelektrode mehrere Teilelektroden, welche in vertikaler Richtung übereinander angeordnet sind, und von denen jeweils gleichzeitig mehrere selektierbar mit der Sensorelektronikeinheit, insbesondere dem Signalgenerator, verbindbar sind.

Weitere Ausführungsformen sind gemäß den Ansprüchen 2-8 offenbart.

Gemäss einem weiteren Aspekt der vorliegenden Erfindung umfasst ein Verfahren zur kapazitiven Schaumdetektion in Flüssigkeitsbehältern, insbesondere Behälter für Reagenzien oder Probenröhrchen, die Schritte:
- Bereitstellen einer leitenden Bodenplatte, welche horizontal angeordnet ist, und eines Sensors mit einer Messelektrode, welche vertikal angeordnet ist, und einer Sensorelektronikeinheit, welche mit der Messelektrode und der Bodenplatte verbunden ist;
- Anordnen eines Flüssigkeitsbehälters oder einer Trägereinheit mit mindestens einer Aufnahme zum Aufnehmen eines Flüssigkeitsbehälters, insbesondere eines Probenröhrchens, auf der Bodenplatte neben der Messelektrode;
- Anregen der Messelektrode mit einem ersten Signal bei einer ersten Frequenz, insbesondere in einem Bereich von 1 kHz bis 1 MHz, bevorzugt in einem Bereich von 300 kHz bis 500 kHz;
- Bestimmen eines ersten Messsignals in Abhängigkeit einer Impedanz, insbesondere einer Kapazität, zwischen der Messelektrode und der Bodenplatte;
- Anregen der Messelektrode oder einer zweiten Messelektrode, welche mit der Sensorelektronikeinheit und der Bodenplatte verbunden ist, mit einem zweiten Signal bei einer zweiten Frequenz, insbesondere in einem Bereich von 1 MHz bis 50 MHz, bevorzugt in einem Bereich von 10 MHz bis 15 MHz;
- Bestimmen eines zweiten Messsignals in Abhängigkeit der Impedanz, insbesondere der Kapazität, zwischen der Messelektrode oder der zweiten Messelektrode und der Bodenplatte; und
- Ausgeben einer Kennung, die ein Vorhandensein von Schaum im Flüssigkeitsbehälter signalisiert, falls eine Differenz zwischen dem ersten und zweiten Messsignal oder ein Verhältnis (Quotient) des ersten und zweiten Messsignals einen vorgegebenen Schwellwert übersteigt.

Dabei können das erste und zweite Signal zum Anregen der Messelektrode mit der ersten und der zweiten Frequenz zeitgleich erzeugt (z.B. als ein Signal mit Frequenzanteilen bei der ersten und zweiten Frequenz) und an die Messelektrode angelegt werden (oder das erste und zweite Signal können zeitlich gestaffelt nacheinander erzeugt und an die Messelektrode angelegt werden). Alternativ ist es auch möglich gleichzeitig die Messelektrode mit dem ersten Signal anzuregen und mit dem zweiten Signal eine (unabhängige) zweite Messelektrode anzuregen, die von der (ersten) Messelektrode örtlich getrennt ist und beispielsweise (geometrisch) parallel neben der (ersten) Messelektrode angeordnet ist. Es sei angemerkt, dass das erste und zweite Signal nicht nur Signalanteile (genau) bei der ersten und der zweiten Frequenz aufweisen müssen, sondern nebst diesen Signalanteilen bei der ersten und der zweiten Frequenz zusätzliche Signalanteile bei anderen Frequenzen in der Nähe von oder in einem Frequenzbereich um die erste und die zweite Frequenz herum umfassen können.

Das erfindungsgemässe Verfahren umfasst die Messelektrode mehrere Teilelektroden, welche in vertikaler Richtung übereinander angeordnet sind, und das Anregen der Messelektrode mit dem ersten und zweiten Signal umfasst das Auswählen von mindestens zwei Teilelektroden und das Anregen von nur der mindestens zwei ausgewählten Teilelektroden.

Weitere Ausführungsformen sind gemäß den Ansprüchen 10-13 offenbart.

Gemäss einem weiteren Aspekt der vorliegenden Erfindung können die vorgeschlagenen Verfahren auch zum Bestimmen einer Art der Flüssigkeit, insbesondere einer Art des Reagenzes, welche sich im Flüssigkeitsbehälter befindet, verwendet werden.

### KURZE BESCHREIBUNG DER ZEICHNUNGEN

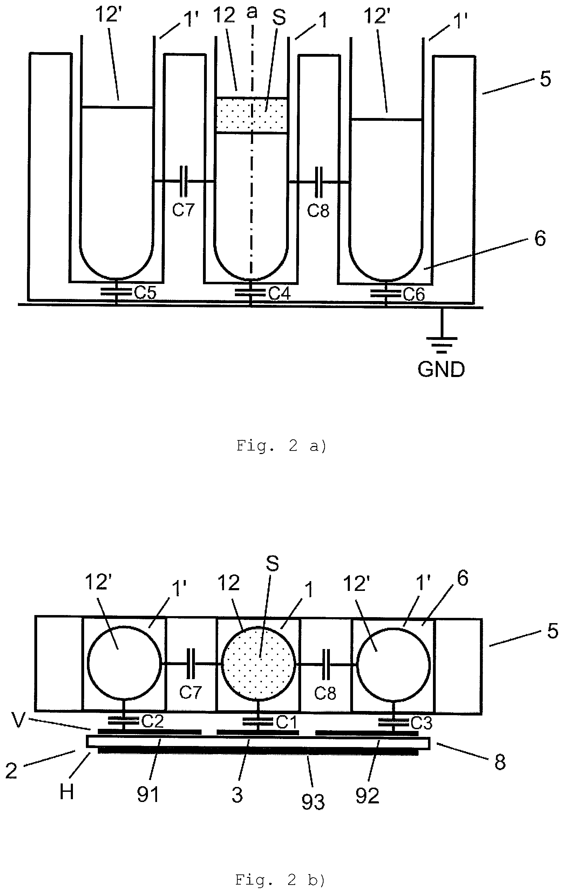

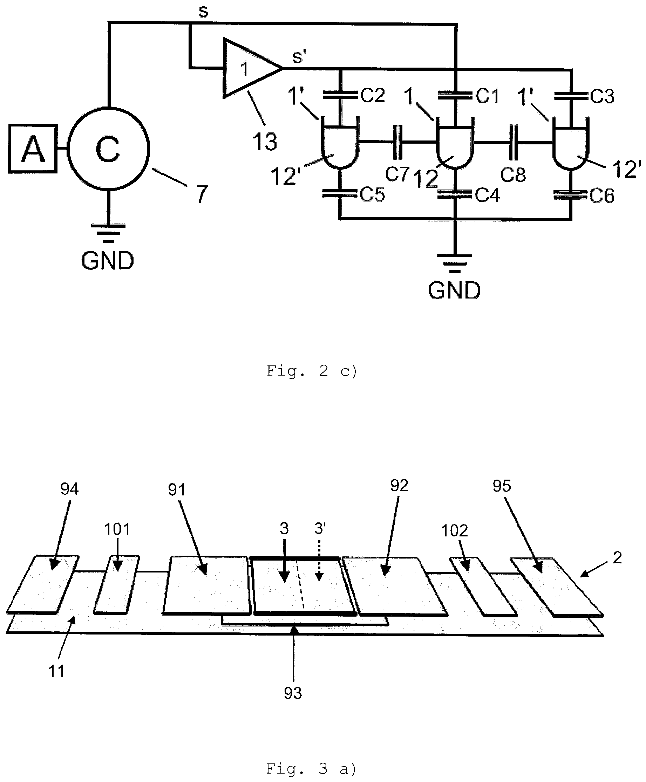

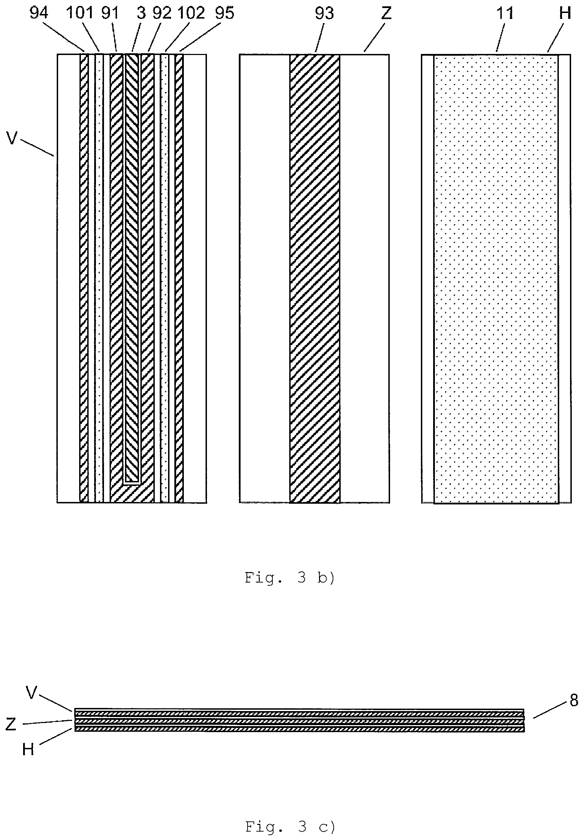

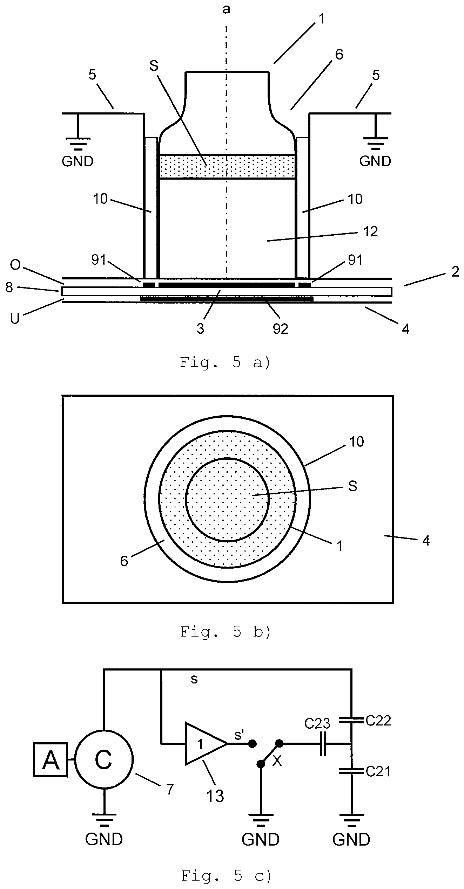

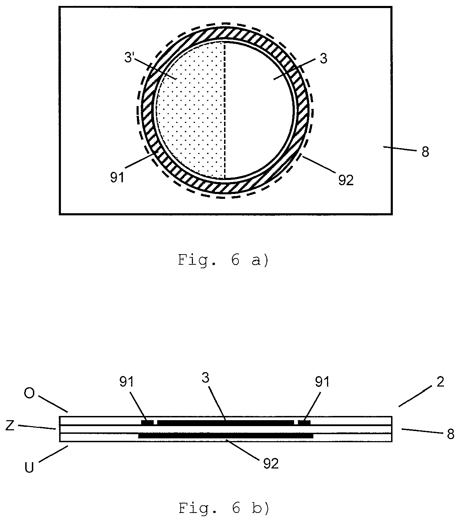

Nichtlimitierende Ausführungsbeispiele der vorliegenden Erfindung werden nachstehend anhand von Figuren noch näher erläutert. Es zeigen:
Fig. 1
   a) schematisch in einer Seitenansicht eine Ausführungsvariante einer nicht erfindungsgemässen Vorrichtung zur kapazitiven Schaumdetektion,
   b) schematisch in einer Seitenansicht eine erfindungsgemässe Vorrichtung zur kapazitiven Schaumdetektion;
Fig. 2
   a) schematisch in einer Seitenansicht eine Trägereinheit mit mehreren Probenröhrchen,
   b) schematisch in einer Ansicht von oben eine Vorrichtung zur kapazitiven Schaumdetektion in den Probenröhrchen gemäss Fig. 2 a),
   c) schematische Darstellung inklusive Andeutung der elektrischen Ersatzschaltung gemäss Fig. 2 a) & b) ;
Fig. 3
   a) eine weitere Ausführungsvariante eines nicht erfindungsgemässen Sensors,
   b) Ansicht der Vorderseite (links) sowie der Zwischenschicht und der Massefläche (rechts) des Sensors gemäss Fig 3 a),
   c) Seitenprofil des Sensors gemäss Fig. 3 a) & b) mit der Vorderseite, der Zwischenschicht und dahinter der Schicht mit der Massefläche;

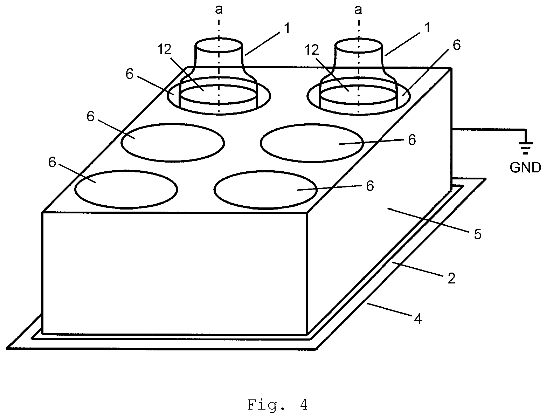

Fig. 4 schematisch in einer perspektivischen Ansicht
   eine Ausführungsvariante einer nicht erfindungsgemässen alternativen Vorrichtung zur kapazitiven Schaumdetektion;
Fig. 5
   a) schematisch ein seitlicher Querschnitt eines Flüssigkeitsbehälters in einer Trägereinheit auf einem nicht erfindungsgemässen Sensor,
   b) schematisch in einer Ansicht von oben gemäss Fig. 5 a),
   c) elektrische Ersatzschaltung der Ausführungsvariante gemäss Fig. 5 a) & b);
Fig. 6
   a) eine Ansicht von oben einer alternativen Ausführungsvariante eines nicht erfindungsgemässen Sensors, und
   b) ein Querschnitt des Sensors gemäss Fig 6 a).

In den Figuren stehen gleiche Bezugszeichen für gleiche Elemente.

### DETAILLIERTE BESCHREIBUNG DER ERFINDUNG

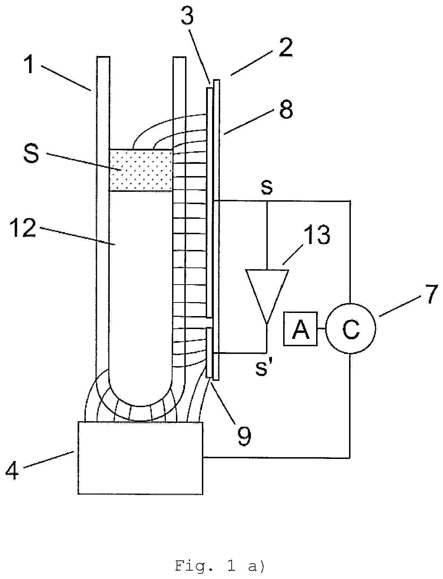

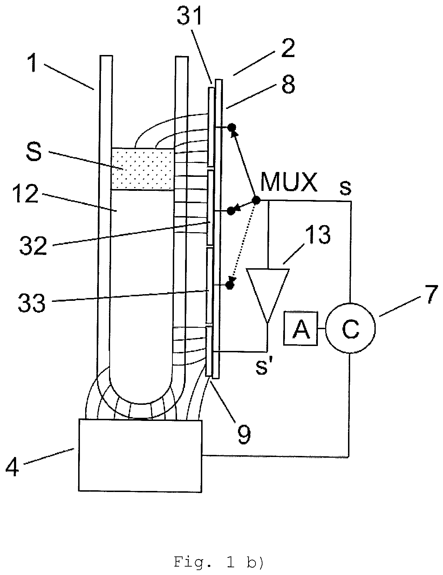

Fig. 1 a) zeigt schematisch in einer Seitenansicht eine beispielhafte Ausführungsvariante einer nicht erfindungsgemässen Anordnung zur kapazitiven Schaumdetektion. Dazu wird ein Flüssigkeitsbehälter, hier ein Probenröhrchen 1 über einer leitenden, horizontalen Bodenplatte (bzw. Arbeitsfläche) 4 und neben einem Sensor 2 mit einer Messelektrode 3 angeordnet. Die Messelektrode 3 und die Bodenplatte 4 sind mit einer Sensorelektronikeinheit 7 verbunden, welche zum Bestimmen der Impedanz, insbesondere der Kapazität (d.h. des Imaginärteils der komplexwertigen Impedanz), zwischen der Messelektrode 3 und der Bodenplatte 4 ausgeführt ist. Typischerweise ist die Bodenplatte 4 geerdet bzw. liegt auf einem Referenzpotential. Um die Kapazität zu messen wird die Messelektrode 3 mit einem Signal s, welches von einem Signalgenerator in der Sensorelektronikeinheit 7 erzeugt wird, angeregt. Aufgrund des Signals s bildet sich ein elektrisches Feld zwischen der Messelektrode 3 und der Bodenplatte 4, wobei die Feldlinien durch die Flüssigkeit 12 hindurchgeleitet werden. Je nach der Menge der Flüssigkeit 12 im Probenröhrchen 1, also je nach Füllstand, verändert sich die gemessene Kapazität.

Die vorliegende Erfindung beruht auf der Erkenntnis, dass bei Anregung der Messelektrode 3 mit einer tiefen Frequenz, z.B. im Bereich von 1 kHz bis 1 MHz, Schaum S, welcher sich auf der Oberfläche der Flüssigkeit 12 befindet, die gemessene Kapazität erhöht (im Vergleich zur selben Messung, wenn kein Schaum S vorhanden ist) und somit in Bezug auf den Füllstand miterfasst wird. Dagegen wird bei Anregung der Messelektrode 3 mit einer hohen Frequenz, z.B. im Bereich von 10 MHz bis 15 MHz (also beispielsweise mit einer um einen Faktor 10 bis 100 höheren Frequenz), der Schaum S sich kaum mehr auf die gemessene Kapazität auswirken, und ist daher in Bezug auf den Füllstand vernachlässigbar. Folglich erscheint der Schaum S bei einer tiefen Anregungsfrequenz als Teil der Flüssigkeit 12 und bei einer hohen Anregungsfrequenz erscheint der Schaum S nicht mehr als Teil der Flüssigkeit, womit der Füllstand, welcher bei der tiefen Frequenz gemessen wird, höher ist, als der Füllstand, welcher bei der hohen Frequenz gemessen wird. Folglich kann zumindest die Anwesenheit von Schaum S z.B. basierend auf einem Vergleich der beiden gemessenen Füllstände detektiert werden. Es sei allerdings angemerkt, dass typischerweise selbst wenn kein Schaum vorhanden ist, bei gleichem effektivem Füllstand die beiden bei verschiedenen Frequenzen basierend auf der gemessenen Kapazität ermittelten Füllstände nicht identisch sein werden. Der Unterschied ist abhängig vom Impedanzspektrum der Flüssigkeit, d.h. von deren frequenzabhängigen Impedanz, bzw. von deren frequenzabhängigen Permittivität (auch dielektrische Leitfähigkeit genannt). Verschiedene Flüssigkeiten, wie z.B. Reagenzien haben verschiedene für sie charakteristische Impedanzspektren. Durch Messung und Vergleich der Kapazität zwischen der Messelektrode 3 und der Bodenplatte 4 bei Anregung der Messelektrode 3 mit einem Signal s mit einer tiefen und einer hohen Frequenz lässt sich folglich sowohl Schaum detektieren als auch die Art der Flüssigkeit 12 bestimmen. So kann beispielsweise Wasser, welches stark polar ist, eindeutig von Ethanol, das weiniger polar ist, unterschieden werden.

Fig. 1 b) veranschaulicht eine erfindungsgemässe Vorrichtung wobei hier die Messelektrode aus mehreren Teilelektroden 31, 32, 33 besteht, welche in vertikaler Richtung übereinander angeordnet sind, und von denen jeweils gleichzeitig mehrere selektierbar mit der Sensorelektronikeinheit 7, insbesondere dem Signalgenerator und der Auswerteeinheit A, verbunden werden können. In Fig. 1 b) ist die unterste Teilelektrode 33 nicht mit der Sensorelektronikeinheit 7 verbunden (d.h. nicht selektiert). Dadurch wird das elektrische Feld gezielt in den Bereich mit Schaum S fokussiert, wodurch die Sensitivität der Schaumdetektion erhöht wird. Die einzelnen Teilelektroden 31, 32, 33 lassen sich z.B. über einen Multiplexer MUX sequentiell mit der Sensorelektronikeinheit 7 verbinden. Je nach Füllstand wird z.B. nur die oberste Teilelektrode 31 oder die mittlere Teilelektrode 32 oder beide (wie in Fig. 1 b) gezeigt) mit der Sensorelektronikeinheit 7 verbinden. Mit einer solchen Anordnung wird einerseits der Einfluss der Flüssigkeit (z.B. deren Leitfähigkeit) minimiert und andererseits die Empfindlichkeit für die Schaumdetektion maximiert.

Optional kann der Sensor 2 nebst der Messelektrode 3 zusätzlich eine Guardelektrode 9 umfassen, welche zusammen mit der Messelektrode 3 auf einem Sensorträger 8 angeordnet ist. Die Guardelektrode 9 wird mit einem niederohmigen Signal s' angeregt, welches durch Anlegen des Signals s an einen Pufferverstärker 13 mit Spannungsverstärkung 1 erzeugt werden kann. Mittels der Guardelektrode 9 kann das elektrische Feld in einer gewünschten Weise fokussiert werden, wodurch sichergestellt wird, dass die Feldlinien von der Messelektrode 3 durch die Flüssigkeit 12 geführt und nicht direkt in die Bodenplatte 4 geleitet werden, was die Genauigkeit der Füllstandsmessung erhöht.

Der in Fig. 1 dargestellte Sensor 2 eignet sich gut, wenn jeweils nur ein einzelner Flüssigkeitsbehälter, wie z.B. ein Trog oder Fläschchen mit einem Reagenz oder Reinigungsmittel, vor die beschriebene Elektrodenanordnung gestellt wird, um dessen Füllstand zu ermitteln oder um Schaum S zu detektieren. Werden hingegen mehrere, nahebeieinander angeordnete Flüssigkeitsbehälter, wie z.B. eine Vielzahl von Probenröhrchen 1 in einer Trägereinheit (Rack) 5, zusammen am Sensor 2 vorbeigeführt, so wird ein Teil der Feldlinien von der Messelektrode 3 durch die Flüssigkeit 12' der benachbarten Probenröhrchen 1' geführt, wodurch die Messung des Füllstands des gewünschten Probenröhrchen 1 durch den Füllstand der benachbarten Probenröhrchen 1' verfälscht werden kann. Auch die Schaumdetektion wird dadurch beeinträchtigt.

In Fig. 2 wird eine Ausführungsvariante eines nicht erfindungsgemässen Sensors 2 gezeigt, welcher das oben beschriebene Problem gelöst, indem das von benachbarten Probenröhrchen 1' verursachte "Übersprechen" stark vermindert wird.

Fig. 2 a) zeigt schematisch in einer Seitenansicht eine Trägereinheit 5 mit mehreren Probenröhrchen 1, welche alle Flüssigkeit 12, 12' enthalten. Der Sensor 2 ist in dieser Darstellung nicht sichtbar, steht jedoch vor den drei abgebildeten Probenröhrchen 1, 1' deren Längsachse a senkrecht zur horizontalen Bodenplatte 4 steht. In Fig. 2 b) wird diese Anordnung von oben gezeigt, hier mit dem Sensor 2. Wie man nun sehen kann, liegt bei diesem Sensor 2 die Messelektrode 3 zwischen zwei Guardelektroden 91, 92, welche links und rechts der Messelektrode 3 angeordnet sind. Die Messelektrode 3 sowie die beiden Guardelektroden 91, 92 sind auf der Vorderseite V einer Leiterplatte, die als Sensorträger 8 dient, angeordnet. Auf der Hinterseite H des Sensorträgers 8 ist eine weitere Guardelektrode 93 angeordnet, welche von hinten sowohl die Messelektrode 3 als auch die beiden vorderen Guardelektroden 91, 92 überdeckt. Durch diese Elektrodenanordnung entsteht ein elektrisches Feld, welches einerseits die Messelektrode 3 mit der Flüssigkeit 12 im davor stehenden Probenröhrchen 1 koppelt (angedeutet durch die Kapazität C1) und die beiden seitlichen Guardelektroden 91, 92 mit der Flüssigkeit 12' in den vor ihnen stehenden Probenröhrchen 1' koppelt (angedeutet durch die Kapazitäten C2 & C3) und andererseits die Flüssigkeit 12, 12' in den drei Probenröhrchen 1, 1' mit der geerdeten Bodenplatte 4 koppelt (angedeutet durch die Kapazitäten C4, C5 & C6). Trotz der Guardelektroden 91, 92 wird immer noch ein kleiner Teil des elektrischen Feldes von der Flüssigkeit 12' in den beiden seitlichen Probenröhrchen 1' in die Flüssigkeit 12 im mittleren Probenröhrchen 1, dessen Füllstand zu messen ist, oder die Anwesenheit von Schaum S darin detektiert werden soll, eingestreut (angedeutet durch die Kapazitäten C7 & C8). Die Kapazitäten C7 & C8 sind allerdings vergleichsweise klein gegenüber der Kapazität C1+C4.

Fig. 2 c) zeigt eine schematische Darstellung inklusive Andeutung der elektrischen Ersatzschaltung der Ausführungsvariante gemäss Fig. 2 a) & b) mit der Sensorelektronikeinheit 7, welche einen Signalgenerator enthält, der das Signal s zum Anregen der Messelektrode 3 liefert, sowie dem Pufferverstärker 13 mit Verstärkung 1, welcher dieses Signal s als niederohmiges Signal s' den beiden Guardelektroden 91, 92 zuführt.

Um das "Übersprechen" bzw. die Verkopplung der Probenröhrchen 1, 1' (bzw. der darin befindlichen Flüssigkeiten 12, 12') weiter zu reduzieren, wird die in Fig. 3 illustrierte Ausführungsvariante vorgeschlagen.

In der Fig. 3 a) wird ein streifenförmiger Ausschnitt des Sensors 2 in einer perspektivischen Darstellung gezeigt. Bei dieser Ausführungsvariante sind zusätzliche auf der Vorderseite V des Sensorträgers 8 je links und rechts der Messelektrode 3 und der beiden Guardelektroden 91, 92 eine Masseelektrode 101, 102 und eine weitere Guardelektrode 94, 95 angeordnet. Durch die gezeigte Anordnung der beiden seitlichen Masseelektrode 101, 102 werden im elektrischen Feld zwischen den drei Proberöhrchen 1, 1' Nullstellen erzeugt. Mit der gestrichelten Linie auf der Messelektrode 3 in Fig. 3 a) wird angedeutet, dass neben der (ersten) Messelektrode 3 eine zweite, unabhängige (d.h. elektrische getrennte) Messelektrode 3' eingesetzt werden kann, wobei diese z.B. mit einer anderen Frequenz als die erste Messelektrode 3 angeregt wird.

In der Abbildung von Fig. 3 b) sind in einer Ansicht von vorne auf der linken Seite die vollständige Vorderseite V des Sensorträgers 8 dargestellt mit der linken, äusseren Guardelektrode 94, der linken Masseelektrode 101, der linken, inneren Guardelektrode 91, der Messelektrode 3, der rechten, inneren Guardelektrode 92, der rechten Masseelektrode 102 sowie der rechten, äusseren Guardelektrode 95, welche allesamt streifenförmig ausgeführt sind, in der Mitte die Zwischenschicht Z mit der Guardelektrode 93, und auf der rechten Seite die Hinterseite H mit der Massefläche 11. Die Länge der Elektrodenstreifen entspricht in etwa der Höhe der Probenröhrchen 1. Als Detail sei noch zu beachten, das sich am unteren Ende der Messelektrode 3 noch ein Stück Guardelektrode 9 befindet, wie dies auch in Fig. 1 gezeigt wird, um sicherzustellen, dass die Feldlinien des elektrischen Feldes von der Messelektrode 3 via die Flüssigkeit 12 im Probenröhrchen 1 zur Bodenplatte 4 gelangen und nicht direkt von der Messelektrode 3 zur Bodenplatte 4 verlaufen und die Flüssigkeit 12 im Probenröhrchen 1 umgehen, wodurch die Füllstandsmessung bzw. die Schaumdetektion verfälscht und somit ungenau resp. unzuverlässig würde.

Fig. 3 c) zeigt noch ein (um 90 Grad in die Horizontale gedrehtes) Seitenprofil des mehrlagigen Sensorträgers 2, welcher z.B. als mehrlagige Leiterplatte ausgeführt ist, mit der Vorderseite V mit den sieben streifenförmigen Elektroden 94, 101, 91, 3, 92, 102 & 95, der Zwischenschicht Z mit der breiten streifenförmigen Guardelektrode 93 und der Hinterseite H mit der noch breiteren Massefläche 11, welche alle vor ihr liegenden Elektrodenstreifen von hinten überdeckt.

Fig. 4 illustriert schematisch in einer perspektivischen Ansicht eine alternative Ausführungsvariante einer nicht erfindungsgemässen Vorrichtung zur kapazitiven Schaumdetektion. Eine leitende Trägereinheit 5 mit sechs Aufnahmen 6 zum Aufnehmen von Flüssigkeitsbehältern 1, wobei sich nur in den beiden hinteren Aufnahmen 6 Flüssigkeitsbehälter 1 mit einer Flüssigkeit 12 wie z.B. ein Reagenz befinden, ist auf einer horizontalen Bodenplatte 4 angeordnet. Zwischen der Bodenplatte 4 und der Trägereinheit 5 liegt ein Sensor 2 mit einer Messelektrode 3. Die Längsachsen a der beiden Flüssigkeitsbehälter 1 sind vertikal, d.h. senkrecht zum Sensor 2 ausgerichtet. Die Trägereinheit 5 ist geerdet, bzw. kapazitiv mit Erdpotential GND gekoppelt. Die Messelektrode 3 ist von der Trägereinheit 5 elektrisch isoliert. Die Messelektrode 3 und die Trägereinheit 5 sind mit einer Sensorelektronikeinheit (s. 7 in Fig. 5 c)) verbunden, um die Kapazität zwischen der Messelektrode 3 und der Trägereinheit 5 zu bestimmen.

Analog wie bei der Ausführungsvariante gemäss Fig. 1 b) lässt sich durch Messung und Vergleich der Kapazität zwischen der Messelektrode 3 und der Trägereinheit 5 bei Anregung der Messelektrode 3 mit einem Signal s mit einer tiefen und einer hohen Frequenz sowohl Schaum S detektieren als auch die Art der Flüssigkeit 12 bestimmen.

Fig. 5 a) zeigt schematisch ein seitlicher Querschnitt eines Flüssigkeitsbehälters 1 in einer Trägereinheit 6 auf einem Sensor 2 gemäss einer Ausführungsvariante der Vorrichtung.

Der Sensor 2 besteht in dieser Ausführungsvariante aus einer runden Messelektrode 3, einer ersten, ringförmigen Guardelektrode 91 und einer zweiten, runden Guardelektrode 92. Die Messelektrode 3 ist dabei von der ringförmigen Guardelektrode 91 umgeben. Beide befinden sich auf der Oberseite O eines Sensorträgers 8, beispielsweise einer Leiterplatte. Die zweite Guardelektrode 92 befindet sich auf der Unterseite U des Sensorträgers 8 und überdeckt sowohl die Messelektrode 3 wie auch die Guardelektrode 91 von unten (d.h. hinter bzw. unterhalb der Messelektrode 3 und der Guardelektrode 91 aus Sicht der Trägereinheit 5). Der Sensorträger 8 liegt auf der Bodenplatte 4, wobei die Trägereinheit 5 derart über dem Sensor 2 angeordnet ist, dass sich die Aufnahme 6 über der Messelektrode 3 befindet. Idealerweise durchstösst dabei die Längsachse a des Flüssigkeitsbehälters 1, welcher sich in der Aufnahme 6 befindet, das Zentrum der kreisförmigen Messelektrode 3. Die geerdete Trägereinheit 5 muss vom Sensor 2 elektrisch isoliert sein. Um dies sicherzustellen, befindet sich z.B. auf die Oberfläche O des Sensorträgers 8 eine Isolationsschicht (in Fig. 5 a) nicht gezeigt; s. dazu Fig. 6 b)). Ferner kann im seitlichen Bereich bzw. an der Wandung der Aufnahme 6 ein nichtleitender Abstandshalter 10 angeordnet werden, wobei der Abstandshalter 10 beispielsweise als Abstandshülse ausgeführt ist, die den Flüssigkeitsbehälter 1 vertikal teilweise oder vollständig umschliesst. Eine solche, den Flüssigkeitsbehälter 1 vertikal vollständig umschliessende Abstandshülse (bzw. Isolationshülse/-ring) 10 ist in der Fig. 6 b) dargestellt, welche die Ausführungsvariante gemäss Fig. 6 a) in einer Ansicht von oben zeigt. Der Isolationsring 10 hat zwei positive Effekte. Einerseits wirken sich Toleranzen/Abweichungen des Aussendurchmessers eines Flüssigkeitsbehälters 1 und des Innendurchmessers einer Aufnahme 6 sowie die Position des Flüssigkeitsbehälters 1 innerhalb der Aufnahme 6 weniger stark auf die Messergebnisse aus. Anderseits wird durch den Isolationsring 10 verhindert, dass kondensierte Feuchtigkeit an der Aussenseite eines gekühlten Flüssigkeitsbehälters 1 (wie z.B. einem Reagenzienbehälter) ein galvanischer Kontakt zur Trägereinheit 5 herstellt und damit die Messungen verfälscht.

Fig. 5 c) stellt eine elektrische Ersatzschaltung der Ausführungsvariante gemäss Fig. 5 a) & b) dar. Die Trägereinheit 5 und die im rechten Winkel dazu angeordnete Messelektrode 3 bilden zusammen einen Kondensator, dessen Kapazität vom Füllstand der Flüssigkeit 12 im Flüssigkeitsbehälter 1 abhängig ist (d.h. je höher der Füllstand desto grösser die Kapazität). Die Kapazität setzt sich aus zwei Teilkapazitäten C21 und C22 zusammen, wobei C21 der Kapazität zwischen der Trägereinheit 5 und der Flüssigkeit 12 und C22 der Kapazität zwischen der Flüssigkeit 12 und der Messelektrode 3 entspricht. C21 verändert sich bei einem zylindrischen Flüssigkeitsbehälter 1 linear mit dem Füllstand. C22 bleibt hingegen ab einer gewissen minimalen Füllmenge bei einer minimalen Leitfähigkeit der Flüssigkeit 12 und bei einem flachen Boden des Flüssigkeitsbehälters 1 unabhängig vom Füllstand konstant. Um die Kapazität zu messen wird die Messelektrode 3 mit einem Signal s, welches von einem Signalgenerator in der Sensorelektronikeinheit 7 erzeugt wird, angeregt. Aufgrund des Signals s bildet sich ein elektrisches Feld zwischen der Trägereinheit 5 und der Messelektrode 3, wobei die Feldlinien durch die Flüssigkeit 12 hindurchverlaufen. Je nach Menge der Flüssigkeit 12, die sich im Flüssigkeitsbehälter 1 befindet, also je nach Füllstand, ergibt sich eine bestimmte, messbare Kapazität. Mittels der ersten Guardelektrode 91 kann das elektrische Feld in einer gewünschten Weise fokussiert werden, wodurch sichergestellt wird, dass der überwiegende Teil des elektrischen Feldes von der Trägereinheit 5 durch die Flüssigkeit 12 in die Messelektrode 3 geführt wird und insbesondere im untersten Bereich der Aufnahme 6 nicht direkt von der Trägereinheit 5 in die Messelektrode 3 geleitet werden, wodurch die Genauigkeit der Füllstandsmessung erhöht wird. Die zweite Guardelektrode 92 dient ebenfalls dazu Randeffekte sowie äussere Störungen zu minimieren und so die Parasitärkapazität zu reduzieren. Die beiden Guardelektroden 91, 92 werden mit einem niederohmigen Signal s' angeregt, welches durch Anlegen des Signals s an einen Pufferverstärker 13 mit Spannungsverstärkung 1 erzeugt werden kann, wie dies in Fig. 5 c) dargestellt ist. Die Guardelektrode 91 kann über den Schalter X wahlweise mit dem niederohmigen Signal s' vom Pufferverstärker 13 oder mit dem Erdpotential GND verbunden werden. Wenn die Guardelektrode 91 geerdet ist, kann durch Messung der Kapazität C21+C23 die Dicke des Bodens des Flüssigkeitsbehälters 1 bestimmt werden.

In Fig. 6 a) ist der Sensor 2, welcher zur Füllstandsmessung bzw. zur Schaumdetektion in einem darüber angeordneten Flüssigkeitsbehälter 1 geeignet ist, in einer Ansicht von oben gezeigt. Hier ist deutlich zu sehen, wie die kreisförmige Messelektrode 3 von der ringförmigen ersten Guardelektrode 91 (schraffiert eingezeichnet) umgeben ist, wobei beide koplanar auf dem Sensorträger 8 angeordnet sind. Die zweite, kreisförmige Guardelektrode 92, welche sich unterhalb der Messelektrode 3 und der ersten Guardelektrode 91 auf der anderen Seite des Sensorträgers 8 befindet, ist gestrichelt angedeutet. Die zweite Guardelektrode 92 überlappt die erste Guardelektrode 91 und deckt die Messelektrode 3 sowie die erste Guardelektrode 91 vollständig von unten bzw. hinten ab. Dies ist deutlich im Querschnitt des Sensors 2 in Fig. 6 b) zu sehen. In der Ausführungsvariante gemäss Fig. 6 b) sind die Messelektrode 3 sowie die erste Guardelektrode 91 auf einer Seite einer Zwischenschicht Z des Sensorträgers 8 aufgebracht, und die zweite Guardelektrode 92 ist auf der anderen Seite der Zwischenschicht Z aufgebracht. Beide Seiten der Zwischenschicht Z sind je mit einer Schutzschicht, beispielsweise aus einem elektrisch isolierenden Material, überzogen. Diese Schutzschichten bilden die Oberseite O und die Unterseite U des Sensors 2.

Mit der gestrichelten Linie auf der Messelektrode 3 in Fig. 6 a) wird angedeutet, dass neben der (ersten, halbkreisförmigen) Messelektrode 3 eine zweite, unabhängige (d.h. elektrische getrennte, gepunktet dargestellte halbkreisförmige) Messelektrode 3' eingesetzt werden kann, wobei diese z.B. mit einer anderen Frequenz als die erste Messelektrode 3 angeregt wird.

Der Sensor 2 kann als separate Einheit auf der Bodenplatte 4 angeordnet und z.B. aufgeklebt werden, oder in der Bodenplatte 4 integriert sein. Alternativ kann der Sensor 2 auch an der Trägereinheit 5 angebracht sein, sodass die Trägereinheit 5 zusammen mit dem Sensor 2 eine Einheit bildet, in welche möglicherweise auch die Sensorelektronikeinheit 7 integriert ist, um eine vollständige Vorrichtung zur kapazitiven Füllstandsmessung von Flüssigkeitsbehältern, die in die Aufnahme(n) 6 der Trägereinheit 5 hineingestellt werden, bereitzustellen. Der Sensor 2 kann selbstverständlich mehrere Messelektroden 3 mit zugehörigen Guardelektrode 91, 92 aufweisen, z.B. eine pro Aufnahme 6 in der Trägereinheit 5.

Die Trägereinheit 5 muss nicht vollständig aus leitendem Material bestehen. So können z.B. leitende Elektroden im Bereich der Aufnahme(n) 6 eingesetzt werden, welche geerdet sind.

Anstatt die Trägereinheit 5 mit Erdpotential GND zu verbinden (also zu erden), kann natürlich auch umgekehrt die Messelektrode 3 mit Erdpotential verbunden sein, wobei dadurch lediglich festgelegt wird, wo sich das Referenzpotential für die Kapazitätsmessung befindet.

### LISTE DER BEZUGSZEICHEN

- 1, 1': Flüssigkeitsbehälter, Trog, Probenröhrchen
- 2: Sensor
- 3: (erste) Messelektrode
- 3': zweite Messelektrode
- 31: erste Teilelektrode der Messelektrode
- 32: zweite Teilelektrode der Messelektrode
- 33: dritte Teilelektrode der Messelektrode
- 4: Bodenplatte
- 5: Trägereinheit
- 6: Aufnahme
- 7: Sensorelektronikeinheit
- 8: Sensorträger
- 9: Guardelektrode
- 91: erste Guardelektrode
- 92: zweite Guardelektrode
- 93: dritte Guardelektrode
- 94: vierte Guardelektrode
- 95: fünfte Guardelektrode
- 101: erste Masseelektrode
- 102: zweite Masseelektrode
- 10: Abstandshalter/-hülse, Isolationsring
- 11: Massefläche
- 12, 12': Flüssigkeit
- 13: Pufferverstärker
- A: Auswerteeinheit
- a: Längsachse eines Probenröhrchens
- C1...C8: (Teil-) Kapazität
- C21...C23: (Teil-) Kapazität
- GND: Ground, Erdpotential
- H: Hinterseite des Sensorträgers
- K: Kennzeichen
- MUX: Multiplexer
- O: Oberseite des Sensorträgers
- p: Einschubpfad der Trägereinheit
- S: Schaum
- s: Signal zum Anregen der Messelektrode
- s': Signal zum Anregen der Guardelektroden
- sc: Steuersignal
- U: Unterseite des Sensorträgers
- V: Vorderseite des Sensorträgers
- X: Schalter
- Z: Zwischenschicht des Sensorträgers

## Patentansprüche

1. Vorrichtung zur kapazitiven Schaumdetektion in Flüssigkeitsbehältern (1), insbesondere Behälter für Reagenzien oder Probenröhrchen, umfassend:
- ein Sensor (2) mit einer Messelektrode (3);
- eine leitende Bodenplatte (4) geeignet zum Anordnen von mindestens einem Flüssigkeitsbehälter (1) oder einer Trägereinheit (5) mit mindestens einer Aufnahme (6) zum Aufnehmen eines Flüssigkeitsbehälters (1), insbesondere eines Probenröhrchens;
- eine Sensorelektronikeinheit (7), welche mit der Messelektrode (3) und der Bodenplatte (4) verbunden ist und zum Bestimmen einer Impedanz, insbesondere einer Kapazität, zwischen der Messelektrode (3) und der Bodenplatte (4) ausgeführt ist; und
- eine Auswerteeinheit (A),
wobei
- die Messelektrode (3) im Wesentlichen senkrecht zur Bodenplatte (4) angeordnet ist, insbesondere vertikal zur horizontal angeordneten Bodenplatte (4) angeordnet ist;
- die Sensorelektronikeinheit (7) ein Signalgenerator umfasst, mit welchem ein erstes Signal zum Anregen der Messelektrode (3) mit einer ersten Frequenz und ein zweites Signal zum Anregen der Messelektrode (3) mit einer zweiten Frequenz erzeugbar ist; und
- die Auswerteeinheit (A) dazu ausgeführt ist, basierend auf der Impedanz, insbesondere der Kapazität, ein Vorhandensein von Schaum (S) im Flüssigkeitsbehälter (1) zu detektieren, falls eine Differenz zwischen einem ersten Messsignal beim Anregen der Messelektrode (3) mit dem ersten Signal und einem zweiten Messsignal beim Anregen der Messelektrode (3) mit dem zweiten Signal oder ein Verhältnis des ersten und zweiten Messsignals einen vorgegebenen Schwellwert übersteigt,
**dadurch gekennzeichnet, dass** die Messelektrode (3) mehrere Teilelektroden (31, 32, 33) umfasst, welche in vertikaler Richtung übereinander angeordnet sind, und von denen jeweils gleichzeitig mehrere selektierbar mit der Sensorelektronikeinheit (7), insbesondere dem Signalgenerator, verbindbar sind.

2. Vorrichtung nach Anspruch 1, weiter umfassend einen Multiplexer (MUX), mit welchem eine ausgewählte Teilelektrode (31, 32, 33) mit der Sensorelektronikeinheit (7) verbindbar ist.

3. Vorrichtung nach Anspruch 1 oder 2, wobei die Messelektrode (3) auf einer Vorderseite (V) eines Sensorträgers (8) oberhalb einer Guardelektrode (9) angeordnet ist, wobei sich die Guardelektrode (9) insbesondere zwischen der Messelektrode (3) und der Bodenplatte (4) befindet.

4. Vorrichtung nach Anspruch 1 oder 2, wobei die Messelektrode (3) auf einer Vorderseite (V) eines Sensorträgers (8) zwischen einer ersten und einer zweiten Guardelektrode (91, 92) angeordnet ist.

5. Vorrichtung nach Anspruch 4, wobei auf einer Hinterseite (H) oder einer Zwischenschicht (Z) des Sensorträgers (8) eine dritte Guardelektrode (93) angeordnet ist, wobei die dritte Guardelektrode (93) mindestens die Messelektrode (3) überdeckt, insbesondere die Messelektrode (3) sowie die erste und zweite Guardelektrode (91, 92) überdeckt.

6. Vorrichtung nach einem der Ansprüche 1 bis 5, wobei die erste Frequenz in einem Bereich von 1 kHz bis 1 MHz, insbesondere in einem Bereich von 300 kHz bis 500 kHz, liegt, und die zweite Frequenz in einem Bereich von 1 MHz bis 50 MHz, insbesondere in einem Bereich von 10 MHz bis 15 MHz, liegt, wobei sowohl die erste wie auch die zweite Frequenz insbesondere unterschiedlich einstellbar sind, und wobei das erste und zweite Signal insbesondere sinusförmige Signale sind.

7. Vorrichtung nach einem der Ansprüche 1 bis 6, wobei die Messelektrode (3) neben der Bodenplatte (4) angeordnet ist.

8. Vorrichtung nach einem der Ansprüche 1 bis 7, welche dazu ausgeführt ist, ein elektrisches Feld gezielt in einen Bereich mit Schaum (S) zu fokussieren.

9. Verfahren zur kapazitiven Schaumdetektion in Flüssigkeitsbehältern (1), insbesondere Behälter für Reagenzien oder Probenröhrchen, umfassend die Schritte:
- Bereitstellen einer leitenden Bodenplatte (4), welche horizontal angeordnet ist, und eines Sensors (2) mit einer Messelektrode (3), welche vertikal angeordnet ist, und einer Sensorelektronikeinheit (7), welche mit der Messelektrode (3) und der Bodenplatte (4) verbunden ist;
- Anordnen eines Flüssigkeitsbehälters (1) oder einer Trägereinheit (5) mit mindestens einer Aufnahme (6) zum Aufnehmen eines Flüssigkeitsbehälters (1), insbesondere eines Probenröhrchens, auf der Bodenplatte (4) neben der Messelektrode (3);
- Anregen der Messelektrode (3) mit einem ersten Signal bei einer ersten Frequenz, insbesondere in einem Bereich von 1 kHz bis 1 MHz, bevorzugt in einem Bereich von 300 kHz bis 500 kHz;
- Bestimmen eines ersten Messsignals in Abhängigkeit einer Impedanz, insbesondere einer Kapazität, zwischen der Messelektrode (3) und der Bodenplatte (4);
- Anregen der Messelektrode (3) oder einer zweiten Messelektrode (3'), welche mit der Sensorelektronikeinheit (7) und der Bodenplatte (4) verbunden ist, mit einem zweiten Signal bei einer zweiten Frequenz, insbesondere in einem Bereich von 1 MHz bis 50 MHz, bevorzugt in einem Bereich von 10 MHz bis 15 MHz;
- Bestimmen eines zweiten Messsignals in Abhängigkeit der Impedanz, insbesondere der Kapazität, zwischen der Messelektrode (3) oder der zweiten Messelektrode (3') und der Bodenplatte (4); und
- Ausgeben einer Kennung, die ein Vorhandensein von Schaum (S) im Flüssigkeitsbehälter (1) signalisiert, falls eine Differenz zwischen dem ersten und zweiten Messsignal oder ein Verhältnis des ersten und zweiten Messsignals einen vorgegebenen Schwellwert übersteigt,
**dadurch gekennzeichnet, dass** die Messelektrode (3) mehrere Teilelektroden (31, 32, 33) umfasst, welche in vertikaler Richtung übereinander angeordnet sind, und das Anregen der Messelektrode (3) mit dem ersten und zweiten Signal, das Auswählen von mindestens zwei Teilelektroden (31, 32, 33) und das Anregen von nur der mindestens zwei ausgewählten Teilelektroden (31, 32, 33) umfasst.

10. Verfahren nach Anspruch 9, wobei das Auswählen von mindestens einer Teilelektrode (31, 32, 33) über einen Multiplexer (MUX) erfolgt, welcher die mindestens eine ausgewählte Teilelektrode (31, 32, 33) mit der Sensorelektronikeinheit (7) verbindet.

11. Verfahren nach Anspruch 9 oder 10, weiter umfassend den Schritt:
- gezieltes Fokussieren eines elektrischen Feldes in einen Bereich mit Schaum (S).

12. Verfahren nach einem der Ansprüche 9 bis 11, weiter umfassend den Schritt:
- Bewegen einer Trägereinheit (5) mit einer Vielzahl von Aufnahmen (6) zum Aufnehmen von Probenröhrchen (1) in horizontaler Richtung an der Messelektrode (3) vorbei,
wobei das Bestimmen des Messsignals während dem Bewegen der Trägereinheit (5) an der Messelektrode (3) vorbei geschieht.

13. Verfahren nach einem der Ansprüche 9 bis 12, wobei das erste und das zweite Signal zum Anregen der Messelektrode (3) zeitgleich an die Messelektrode (3) angelegt werden, und das erste und zweite Messsignal zeitgleich bestimmt werden.

14. Verwendung des Verfahrens nach einem der Ansprüche 9 bis 13 zum Bestimmen einer Art der Flüssigkeit (12), insbesondere einer Art des Reagenzes, welche sich im Flüssigkeitsbehälter (1) befindet.

## Claims

1. Device for capacitive foam detection in liquid containers (1), in particular containers for reagents or sample tubes, comprising:
- a sensor (2) having a measurement electrode (3);
- a conductive bottom plate (4) suitable for arranging at least one liquid container (1) or a carrier unit (5) having at least one receptacle (6) for receiving a liquid container (1), in particular a sample tube;
- a sensor electronic unit (7) which is connected to the measurement electrode (3) and the bottom plate (4) and is adapted to determine an impedance, in particular a capacitance, between the measurement electrode (3) and the bottom plate (4); and
- an evaluation unit (A),
wherein
- the measurement electrode (3) is arranged substantially perpendicularly to the bottom plate (4), in particular is arranged vertically to the horizontally arranged bottom plate (4);
- the sensor electronic unit (7) comprises a signal generator with which a first signal for exciting the measurement electrode (3) at a first frequency and a second signal for exciting the measurement electrode (3) at a second frequency can be generated; and
- the evaluation unit (A) is adapted to detect, based on the impedance, in particular the capacitance, a presence of foam (S) in the liquid container (1) if a difference between a first measurement signal in the case of exciting the measurement electrode (3) with the first signal and a second measurement signal in the case of exciting the measurement electrode (3) with the second signal or a ratio of the first and second measurement signals exceeds a predetermined threshold value,
**characterized in that** the measurement electrode (3) comprises a plurality of sub-electrodes (31, 32, 33) which are arranged one above the other in vertical direction and of which in each case simultaneously a plurality can be selectively connected to the sensor electronic unit (7), in particular the signal generator.

2. Device according to claim 1, further comprising a multiplexer (MUX) with which a selected sub-electrode (31, 32, 33) can be connected to the sensor electronic unit (7).

3. Device according to claim 1 or 2, wherein the measurement electrode (3) is arranged on a front side (V) of a sensor carrier (8) above a guard electrode (9), wherein the guard electrode (9) is located in particular between the measurement electrode (3) and the bottom plate (4) .

4. Device according to claim 1 or 2, wherein the measurement electrode (3) is arranged on a front side (V) of a sensor carrier (8) between a first and a second guard electrode (91, 92).

5. Device according to claim 4, wherein a third guard electrode (93) is arranged on a rear side (H) or an intermediate layer (Z) of the sensor carrier (8), wherein the third guard electrode (93) covers at least the measurement electrode (3), in particular covers the measurement electrode (3) as well as the first and second guard electrode (91, 92).

6. Device according to one of claims 1 to 5, wherein the first frequency lies in a range from 1 kHz to 1 MHz, in particular in a range from 300 kHz to 500 kHz, and the second frequency lies in a range from 1 MHz to 50 MHz, in particular in a range from 10 MHz to 15 MHz, wherein both the first and the second frequency are in particular differently adjustable, and wherein the first and second signals are in particular sinusoidal signals.

7. Device according to one of claims 1 to 6, wherein the measurement electrode (3) is arranged next to the bottom plate (4).

8. Device according to one of claims 1 to 7, adapted to focus an electric field specifically in an area with foam (S) .

9. Method for capacitive foam detection in liquid containers (1), in particular containers for reagents or sample tubes, comprising the steps of:
- providing a conductive bottom plate (4), which is arranged horizontally, and a sensor (2) having a measurement electrode (3), which is arranged vertically, and a sensor electronic unit (7), which is connected to the measurement electrode (3) and the bottom plate (4);
- arranging a liquid container (1) or a carrier unit (5) having at least one receptacle (6) for accommodating a liquid container (1), in particular a sample tube, on the bottom plate (4) next to the measurement electrode (3) ;
- exciting the measurement electrode (3) with a first signal at a first frequency, especially in a range from 1 kHz to 1 MHz, preferably in a range from 300 kHz to 500 kHz;
- determining a first measurement signal depending on an impedance, in particular a capacitance, between the measurement electrode (3) and the bottom plate (4);
- exciting the measurement electrode (3) or a second measurement electrode (3'), which is connected to the sensor electronic unit (7) and the bottom plate (4), with a second signal at a second frequency, in particular in a range from 1 MHz to 50 MHz, preferably in a range from 10 MHz to 15 MHz;
- determining a second measurement signal depending on the impedance, in particular the capacitance, between the measurement electrode (3) or the second measurement electrode (3') and the bottom plate (4); and
- outputting an identifier signaling the presence of foam (S) in the liquid container (1) if a difference between the first and second measurement signals or a ratio of the first and second measurement signals exceeds a predetermined threshold value,
**characterized in that** the measurement electrode (3) comprises a plurality of sub-electrodes (31, 32, 33) arranged one above the other in the vertical direction, and exciting the measurement electrode (3) with the first and second signals comprises selecting at least two sub-electrodes (31, 32, 33) and exciting only the at least two selected sub-electrodes (31, 32, 33).

10. Method according to claim 9, wherein the selection of at least one sub-electrode (31, 32, 33) is effected via a multiplexer (MUX) which connects the at least one selected sub-electrode (31, 32, 33) to the sensor electronic unit (7) .

11. Method according to claim 9 or 10, further comprising the step of:
- specifically focusing an electric field in an area with foam (S).

12. Method according to one of claims 9 to 11, further comprising the step of:
- moving a carrier unit (5) with a plurality of receptacles (6) for accommodating sample tubes (1) in a horizontal direction past the measurement electrode (3),
wherein the determination of the measurement signal is performed during the movement of the carrier unit (5) past the measurement electrode (3).

13. Method according to one of claims 9 to 12, wherein the first and second signals for exciting the measurement electrode (3) are applied to the measurement electrode (3) simultaneously, and the first and second measurement signals are determined simultaneously.

14. Use of the method according to one of claims 9 to 13 to determine a type of liquid (12), in particular a type of reagent, which is contained in the liquid container (1).

## Revendications

1. Dispositif de détection de mousse capacitive dans des récipients de liquide (1), en particulier des récipients pour réactifs ou tubes à essai, comprenant :
- un capteur (2) avec une électrode de mesure (3) ;
- une plaque de base conductrice (4) conçue pour agencer au moins un récipient de liquide (1) ou une unité de support (5) comprenant au moins un logement (6) pour recevoir un récipient de liquide (1), en particulier un tube à essai ;
- une unité électronique de détection (7) raccordée à l'électrode de mesure (3) et à la plaque de base (4) et conçue pour déterminer une impédance, en particulier une capacité, entre l'électrode de mesure (3) et la plaque de base (4) ; et
- une unité d'analyse (A),
dans lequel
- l'électrode de mesure (3) est agencée sensiblement perpendiculairement à la plaque de base (4), en particulier verticalement par rapport à la plaque de base (4) agencée horizontalement ;
- l'unité électronique de détection (7) comprend un générateur de signal qui permet de générer un premier signal pour exciter l'électrode de mesure (3) avec une première fréquence et un deuxième signal pour exciter l'électrode de mesure (3) avec une deuxième fréquence ; et
- l'unité d'analyse (A) est conçue, sur la base de l'impédance, en particulier de la capacité, pour détecter la présence de mousse (S) dans le récipient de liquide (1) dans le cas où la différence entre un premier signal de mesure lors de l'excitation de l'électrode de mesure (3) avec le premier signal et un deuxième signal de mesure lors de l'excitation de l'électrode de mesure (3) avec le deuxième signal, ou le rapport entre le premier et le deuxième signal, dépasse une valeur seuil prédéfinie,
**caractérisé en ce que** l'électrode de mesure (3) comprend plusieurs électrodes partielles (31, 32, 33) agencées les unes au-dessus des autres dans le sens vertical, et plusieurs d'entre elles pouvant être sélectionnées simultanément avec l'unité électronique de détection (7), pouvant en particulier être raccordées au générateur de signal.

2. Dispositif selon la revendication 1, comprenant en outre un multiplexeur (MUX) permettant de raccorder une électrode partielle sélectionnée (31, 32, 33) à l'unité électronique de détection (7).

3. Dispositif selon la revendication 1 ou 2, dans lequel l'électrode de mesure (3) est agencée sur une face avant (V) d'un support de capteur (8) au-dessus d'une électrode de garde (9), l'électrode de garde (9) se trouvant en particulier entre l'électrode de mesure (3) et la plaque de base (4).

4. Dispositif selon la revendication 1 ou 2, dans lequel l'électrode de mesure (3) est agencée sur une face avant (V) d'un support de capteur (8) entre une première et une deuxième électrode de garde (91, 92).

5. Dispositif selon la revendication 4, dans lequel une troisième électrode de garde (93) est agencée sur une face arrière (H) ou sur une couche intermédiaire (Z) du support de capteur (8), la troisième électrode de garde (93) recouvrant au moins l'électrode de mesure (3), recouvrant en particulier l'électrode de mesure (3) ainsi que la première et la deuxième électrode de garde (91, 92).

6. Dispositif selon l'une des revendications 1 à 5, dans lequel la première fréquence se situe dans une plage allant de 1 kHz à 1 MHz, en particulier dans une plage allant de 300 kHz à 500 kHz, et la deuxième fréquence se situe dans une plage allant de 1 MHz à 50 MHz, en particulier dans une plage allant de 10 MHz à 15 MHz, la première et la deuxième fréquence pouvant notamment être réglées différemment, et le premier et le deuxième signal étant en particulier des signaux sinusoïdaux.

7. Dispositif selon l'une des revendications 1 à 6, dans lequel l'électrode de mesure (3) est agencée à côté de la plaque de base (4).

8. Dispositif selon l'une des revendications 1 à 7, conçu pour focaliser un champ électrique de façon ciblée dans une zone avec de la mousse (S).

9. Procédé de détection de mousse capacitive dans des récipients de liquide (1), en particulier des récipients pour réactifs ou tubes à essai, comprenant les étapes consistant à :
- fournir une plaque de base conductrice (4) agencée horizontalement, un capteur (2) avec une électrode de mesure (3) agencée verticalement, et une unité électronique de détection (7) raccordée à l'électrode de mesure (3) et à la plaque de base (4) ;
- agencer un récipient de liquide (1) ou une unité de support (5) avec au moins un logement (6) pour recevoir un récipient de liquide (1), en particulier un tube à essai, sur la plaque de base (4) à côté de l'électrode de mesure (3) ;
- exciter l'électrode de mesure (3) avec un premier signal à une première fréquence, en particulier dans une plage allant de 1 kHz à 1 MHz, de préférence dans une plage allant de 300 kHz à 500 kHz ;
- définir un premier signal de mesure en fonction d'une impédance, en particulier d'une capacité, entre l'électrode de mesure (3) et la plaque de base (4) ;
- exciter l'électrode de mesure (3) ou une deuxième électrode de mesure (3') raccordée à l'unité électronique de détection (7) et à la plaque de base (4) avec un deuxième signal à une deuxième fréquence, en particulier dans une plage allant de 1 MHz à 50 MHz, de préférence dans une plage allant de 10 MHz à 15 MHz ;
- définir un deuxième signal de mesure en fonction de l'impédance, en particulier de la capacité, entre l'électrode de mesure (3) ou la deuxième électrode de mesure (3') et la plaque de base (4) ; et
- émettre un code qui signale la présence de mousse (S) dans le récipient de liquide (1) dans le cas où la différence entre le premier et le deuxième signal de mesure ou le rapport entre le premier et le deuxième signal de mesure dépasse une valeur seuil prédéfinie,
**caractérisé en ce que** l'électrode de mesure (3) comprend plusieurs électrodes partielles (31, 32, 33) agencées les unes au-dessus des autres dans le sens vertical, et **en ce que** l'excitation de l'électrode de mesure (3) avec le premier et le deuxième signal consiste à sélectionner au moins deux électrodes partielles (31, 32, 33) et à exciter uniquement les au moins deux électrodes partielles (31, 32, 33) sélectionnées.

10. Procédé selon la revendication 9, dans lequel la sélection d'au moins une électrode partielle (31, 32, 33) se fait par le biais d'un multiplexeur (MUX) qui relie la au moins une électrode partielle sélectionnée (31, 32, 33) à l'unité électronique de détection (7).

11. Procédé selon la revendication 9 ou 10, comprenant en outre l'étape consistant à :
- focaliser de façon ciblée un champ électrique dans une zone avec de la mousse (S).

12. Procédé selon l'une des revendications 9 à 11, comprenant en outre l'étape consistant à :
- faire passer une unité de support (5) avec une pluralité de logements (6) destinés à recevoir des tubes à essai (1) devant l'électrode de mesure (3) dans le sens horizontal,
la détermination du signal de mesure intervenant pendant que l'unité de support (5) passe devant l'électrode de mesure (3).

13. Procédé selon l'une des revendications 9 à 12, dans lequel le premier et le deuxième signal pour exciter l'électrode de mesure (3) sont appliqués simultanément à l'électrode de mesure (3), et le premier et le deuxième signal de mesure sont définis simultanément.

14. Utilisation du procédé selon l'une des revendications 9 à 13 pour définir le type de liquide (12), en particulier le type de réactif, qui se trouve dans le récipient de liquide (1).
